# EUROPEAN PATENT SPECIFICATION

(11) **EP 3 731 617 B1**
(45) Date of publication and mention of the grant of the patent: **15.12.2021**
(21) Application number: 18833830.5
(22) Date of filing: 18.12.2018
(51) Int. Cl.: A01B 79/00, A01D 34/00, A01D 41/14

(54) **APPARATUS AND METHOD FOR IMPROVING THE YIELD OF GRASS AND CLOVER HARVESTED FROM AN AGRICULTURAL FIELD**
VORRICHTUNG UND VERFAHREN ZUR VERBESSERUNG DER AUSBEUTE VON AUS EINEM LANDWIRTSCHAFTLICHEN FELD GEERNTETEM GRAS UND KLEE
APPAREIL ET PROCÉDÉ POUR AMÉLIORER LE RENDEMENT EN HERBE ET EN TRÈFLE RÉCOLTÉS DANS UN CHAMP AGRICOLE

(30) Priority: 29.12.2017 DK PA201700750
(43) Date of publication of application: 04.11.2020
(73) Proprietor: Agro Intelligence ApS, 8200 Aarhus N (DK)
(72) Inventor: GREEN, Ole, 6940 Lem St. (DK); JACOBSEN, Henrik Lynge, 4652 Hårlev (DK); STEEN, Kim Arild, 8520 Lystrup (DK); NIELSEN, Søren Kirkegaard, 8600 Silkeborg (DK)
(74) Representative: Rasmussen, Martin Hoffgaard
(86) International application number: PCT/DK2018/050370
(87) International publication number: WO 2019/129333

(56) References cited:
- EP-A1- 1 000 540
- EP-A1- 1 709 859
- EP-A1- 2 695 511
- EP-A1- 2 870 853
- Anders Mortensen ET AL: "Sensors | Free Full-Text | Estimation of the Botanical Composition of Clover-Grass Leys from RGB Images Using Data Simulation and Fully Convolutional Neural Networks", Journal of Imaging 2017,3, 59, 6 December 2017 (2017-12-06), pages 1-16, XP055571599, DOI: 10.3390/jimaging3040059 Retrieved from the Internet: URL:https://www.mdpi.com/1424-8220/17/12/2 930 [retrieved on 2019-03-20] cited in the application

## Description

### Field of the invention

The present invention relates in general to the field of agriculture. More specifically the present invention relates in a first aspect to an agricultural mowing apparatus. In a second aspect the present invention relates to the use of such a mowing apparatus for cutting grass and clover. In a third aspect the present invention relates to a method for optimizing harvested biomass yield from an agricultural grass and clover field.

### Background of the invention

Silage has for hundreds of years been used as fodder for cattle and other animals used in farming. Silage is formed from lignocellulosic biomass, such as grass and clover by fermentation where lactic acid forming bacteria participate in the fermentation process.

Silage has the advantage that, when stored under conditions in absence of oxygen, it remains relatively stable without any profound change or deteriorating in composition during long periods of time.

Accordingly, silage represents a valuable source of fodder to be fed to animals during those seasons where fresh plants are not readily available.

As mentioned above grass is a common feedstock for the manufacture of silage. However, also clover is a common feedstock for the manufacture of silage.

Grass and clover are usually grown in the same agricultural fields for the purpose of enabling a good feed composition as cow feed and in respect of nutrient value in the resulting silage they complement each other well.

Accordingly, when producing silage from a grass and clover field, the grass and clover are harvested by cutting using a mower, which may also comprise a conditioning mechanism for crack open the cells of the plant material. Subsequently, the grass and clover are left of the field for a couple of days where it is being subjected to an appropriate field management, such as performing one or more inversions in order to dry it to a desirable moist content. Hereafter the grass and clover is collected and stacked in a silo.

Subsequent cycles of growing a new batches of grass and clover, harvesting it, allowing it to partly dry and stacking it in a silo are performed throughout the growth season of the grass and clover.

It has been found that the regrowth rate of grass is dependent on the length of the individual grass stem.

It has also been found that the regrowth rate of clover is dependent on the length of the individual clover stem.

However, the regrowth rate of grass is higher when the grass has been cut with a low stem height, i.e. by using low cutting height of the mower, compared to the situation in respect of clover because clover is not stimulated in the same way as grass by a low stem height. Accordingly, this fact allows for increasing an overall biomass harvesting yield throughout a season or part thereof by taking into account, during a mowing operation, the grass/clover ratio of a specific portion of the agricultural field and by adjusting the cutting height of the mower accordingly when mowing that specific portion of the field.

EP 2 695 511 A1 discloses an agricultural harvester comprising a harvesting header, a header support configured for changing the height of the header, and a height sensor. Based on a signal from the height sensor, sensing a height over ground, the height of the harvesting header can be adjusted. EP 2 695 511 A1 does not disclose the use of an optical system for capturing and processing images of the crops growing on the agricultural field for the purpose of determining a relative crop coverage between different types of crops and using such information as an input in the adjustment of the cutting height performed by the harvesting header. EP 1 709 859 A1 discloses a mowing head's height control method, for use with work vehicle, which involves scanning subsoil before and laterally from mowing head by contact-less sensor, and changing height and tilting positions under consideration of speed of head It is an objective of the present invention to provide technologies that benefit from the different regrowth rates, depending on stem length, of grass and clover, respectively, for increasing an overall biomass harvesting yield, during multiple cycles of growth and harvesting, in a grass and clover field.

### Brief description of the invention

These objectives are fulfilled according to the first, the second and the third aspect of the present invention.

Accordingly, the first aspect of the present invention relates to an agricultural mowing apparatus comprising:
- a cutting mechanism for cutting grass of an agricultural field;
- an image capturing device configured for capturing images of a portion of an agricultural field;
- an image processing device for analysing an image captured by said image capturing device;
- a control unit;

wherein said cutting mechanism comprises height adjustment means for adjustment of the cutting height of said cutting mechanism in response to a height adjustment signal being provided thereto;
wherein said image processing device, in respect of an image captured by said image capturing device is configured for analysing said image so as to provide estimation information relating to an estimated magnitude of a specific crop coverage being present in said portion of the agricultural field corresponding to said image;
wherein said control unit being configured to receive said estimation information from said image processing device;
   - wherein said control unit is being configured to provide said height adjustment signal to said height adjustment means of said cutting mechanism, in response to said estimation information, thereby affecting an adjustment of the cutting height of said cutting mechanism in response to a change in said estimated magnitude of said specific crop coverage of the portion of the agricultural field to be cut by said cutting mechanism.

In a second aspect the present invention relates to a use of an apparatus according to the first aspect of the present invention for cutting grass and clover in an agricultural field.

In a third aspect the present invention relates to a method for optimizing harvested biomass yield from an agricultural grass and clover field, wherein said method comprises:
i) cutting said agricultural field comprising grass and clover by using a mowing apparatus;
ii) while cutting said agricultural field, using an image processing device for providing estimation information relating to an estimated magnitude of a specific crop coverage being present in the portion of the agricultural field to be cut;
iii) on the basis of the estimation information as provided in step ii), adjusting the cutting height of the cutting mechanism of said mowing apparatus in order to obtain an optimum cutting height of said portion of the field to be cut.

The present invention in its various aspects provides for increasing the overall biomass yield of grass and clover from an agricultural field.

This result is obtained by utilizing a clever grass/clover harvesting scheme in which the cutting height of the cutting mechanism of a mower mowing the agricultural field is adjusted depending on the coverage of a specific crop, either grass or clover, of the specific portion of the agricultural field being cut.

Accordingly, with the present invention an improved biomass yield can be obtained in a grass/clover field during multiple cycles of growth and harvesting.

### Brief description of the figures

Fig. 1 is side view illustrating a mowing apparatus of the present invention in operation.
Fig. 2 is a diagram illustrating the working mode of the control unit of the mowing apparatus of the present invention.
Fig. 3 is a diagrammatic representation of part of the working mode of an image processing device of the mowing apparatus of the present invention.
Fig. 4a, 4b and 4c are diagrammatic representations of the concept of learning data and learning images as applied in the present application.

### Detailed description of the invention

### The first aspect of the present invention

Accordingly, the first aspect of the present invention relates to an agricultural mowing apparatus comprising:
- a cutting mechanism for cutting grass of an agricultural field;
- an image capturing device configured for capturing images of a portion of an agricultural field;
- an image processing device for analysing an image captured by said image capturing device;
- a control unit;

wherein said cutting mechanism comprises height adjustment means for adjustment of the cutting height of said cutting mechanism in response to a height adjustment signal being provided thereto;
wherein said image processing device, in respect of an image captured by said image capturing device is configured for analysing said image so as to provide estimation information relating to an estimated magnitude of a specific crop coverage being present in said portion of the agricultural field corresponding to said image;
wherein said control unit being configured to receive said estimation information from said image processing analyser;
wherein said control unit is being configured to provide said height adjustment signal to said height adjustment means of said cutting mechanism, in response to said estimation information, thereby affecting an adjustment of the cutting height of said cutting mechanism in response to a change in said estimated magnitude of said specific crop coverage of the portion of the agricultural field to be cut by said cutting mechanism.

The present invention in its first aspect accordingly provides for an agricultural mower which is provided with image capturing means and an image processing device so as to be able, while mowing, to provide estimation information relating to an estimate of the magnitude of the coverage of either grass or clover in a specific portion of the agricultural field being mowed and in response to this estimation information, adjusting the cutting height of cutting mechanism of the mower.

By exploiting the fact that grass and clover, respectively have regrowth rates (i.e. rate of growth after being cut) which is dependent on the stem length of the plant and by exploiting the fact that the regrowth rates of grass and clover, respectively, are different, it is possibly to increase harvesting yields of biomass originating from a grass and clover field during multiple cycles of growing new batches of grass and clover, harvesting it, allowing it to partly dry and stacking it in a silo.

As the regrowth rate of grass is higher when the grass has been cut with a low stem height, compared to the situation in respect of clover, it will be advantages to employ a low cutting height in these specific portions of the agricultural filed which represent a relative high grass coverage, or a relative low clover coverage; and vice versa.

In the present description and in the appended claims the following definitions shall be adhered to:
Grass: The term "grass" may be defined as any plant belonging to the family Poacea or
Gramineae, preferably of the genus Lolium or Phleum, such as Westerwolds Ryegrass, Italian Ryegrass, Hybrid Ryegrass, Perennial Ryegrass, Timothy grass. Preferably, the grass species is a species which traditionally and conventionally has been used as feedstock in a silage manufacturing process.

Clover: The term "clover" may be defined as any plant belonging to the family Fabaceae, preferably of the genus Trifolium, such as red and white clover species. Preferably, the clover species is a species which traditionally and conventionally has been used as feedstock in a silage manufacturing process.

Crop: The term "crop" is defined as being grass or clover or a mixture thereof.

A specific crop: The term "a specific crop" is defined as either being grass or being clover.

Weed: The term "weed" is being defined as any plant not being grass and not being clover.

Biomass: The term "biomass" is being defined as plant material comprising grass and/or clover and/or weed.

A specific crop coverage: The term "a specific crop coverage" is being defined as that relative area of a portion of an agricultural field covered by that specific crop.

In the present description and in the appended claims the term "coverage" may be expressed as a percentage or as a fraction, or as a ratio in relation to the other type of crop and/or in relation to weed.

Although in the present description the term mower will be described as an apparatus for cutting grass in an agricultural field, it should be noted that such an apparatus obviously is able to and configured for cutting grass and clover growing in an agricultural field.

In one embodiment of an agricultural mowing apparatus according to the first aspect of the present invention said estimation information relating to an estimated magnitude of a specific crop coverage is independently selected from the group comprising:
- coverage of grass; and/or
- coverage of clover; and/or
- coverage of weed; and/or
- a ratio relating to: coverage of grass / coverage of clover; and/or
- a ratio relating to: coverage of grass / coverage of clover / coverage of weed.

Using these definitions of the estimation information will in a reliable manner provide information as to the grass coverage and/or the clover coverage of the agricultural field.

In one embodiment of an agricultural mowing apparatus according to the first aspect of the present invention said control unit being configured to provide said height adjustment signal to said height adjustment means of said cutting mechanism in such a way that a relatively high estimated magnitude of grass coverage and/or a relatively low estimated magnitude of clover coverage corresponds to a relatively low cutting height of said cutting mechanisms, whereas a relatively low estimated magnitude of grass coverage and/or a relatively high estimated magnitude of clover coverage corresponds to a relatively high cutting height of said cutting mechanism.

Such a height adjustment scheme provides for achieving a higher yield of a biomass of grass and clover growing in the field.

In one embodiment of an agricultural mowing apparatus according to the first aspect of the present invention said control unit is being configured to provide said height adjustment signal to said height adjustment means of said cutting mechanism according to a predetermined cutting height adjustment algorithm.

Hereby the cutting height can be adjusted according to a predetermined cutting height scheme, depending on the specific crop coverage of grass and/or clover.

In one embodiment of an agricultural mowing apparatus according to the first aspect of the present invention said predetermined cutting height adjustment algorithm is based on a correlation between the said estimation information on the one hand and an optimum cutting height on the other hand.

Such an algorithm will ultimately lead to a higher yield of grass and/or clover during several cycles of cutting the biomass of the field.

In one embodiment of an agricultural mowing apparatus according to the first aspect of the present invention said agricultural mowing apparatus is a self-propelled agricultural mowing apparatus or is an implement to be towed by or suspended on, or otherwise being connected to a self-propelled agricultural vehicle.

Such two alternatives provide great flexibility in the mowing of an agricultural field.

In one embodiment of an agricultural mowing apparatus according to the first aspect of the present invention said apparatus comprises two or more cutting mechanisms which are arranged relative to each other in a mutual staggered arrangement in a direction perpendicular to the moving direction of said mowing apparatus; and wherein each said cutting mechanism comprises an individually controllable height adjustment means for adjustment of the cutting height of said individual cutting mechanism; and wherein said control unit is being configured to provide an individual height adjustment signal to each said height adjustment means of said two or more cutting mechanisms.

Such provision of more than one cutting mechanism will result in a more efficient cutting of the biomass, yet still allowing individual adjusting the of the cutting height.

The cutting mechanisms may accordingly be configured for being individually adjustable adjusted in relation to cutting height, or may be configured for being commonly adjusted in relation to cutting height.

In one embodiment of an agricultural mowing apparatus according to the first aspect of the present invention the number of individually controllable cutting mechanisms is 3 - 20, such as 4 - 19, for example 5 - 18, such as 6 - 17, for example 7 - 16, such as 8 - 15, for example 9 - 14, such as 10 - 13 or 11 - 12.

In one embodiment of an agricultural mowing apparatus according to the first aspect of the present invention said apparatus comprises two or more image capturing devices which collectively are configured for capturing images of two or more portions of said agricultural field;
wherein said two or more portions of said agricultural field are arranged relative to each other in a mutual staggered arrangement in a direction perpendicular to the moving direction of said mowing apparatus;
wherein said image processing device, in respect of an image captured by each of said image capturing devices is configured for analysing said image so as to provide an estimation information relating to an estimated magnitude of a specific crop coverage being present in the portion of the agricultural field corresponding to each said image;
wherein said control unit is being configured to receive an estimation information from said image processing device in respect of each said images;
wherein in respect of each of said images being captured by said two or more image capturing devices said control unit is being configured to provide a height adjustment signal to that specific height adjustment means of said cutting mechanism which is being responsible for cutting the portion of said agricultural field corresponding to that specific image, based on said specific estimation information.

Such a setup allows for providing estimation information in a wider, relative to the direction of the movement, scanning range of the image capturing device. This is particularly advantageous in case more than one cutting mechanisms are comprised in the mowing apparatus.

In one embodiment of an agricultural mowing apparatus according to the first aspect of the present invention the number of image capturing devices is 3 - 20, such as 4 - 19, for example 5 - 18, such as 6 - 17, for example 7 - 16, such as 8 - 15, for example 9 - 14, such as 10 - 13 or 11 - 12.

In one embodiment of an agricultural mowing apparatus according to the first aspect of the present invention said control unit is configured for receiving a signal from a global navigation satellite system (GNSS), such as a GPS signal.

Providing the control unit with global navigation satellite system allows for gaining position indicating information of the mowing apparatus and in particular of the cutting unit(s).

In one embodiment of an agricultural mowing apparatus according to the first aspect of the present invention said control unit is being configured to allocate said estimation information which is being provided in respect of said images being captured; and wherein said control unit is being configured to allocate coordinates relating to a geographical position of said images being captured; and wherein said control unit is being configured for storing on said data storage a correlation between an estimated magnitude of a specific crop coverage on the one hand and positions on the other hand; said correlation thereby representing a specific coverage map of said agricultural field or part thereof.

Such data storage may be in the form of a data storage of the solid state type, such as based on semiconductor technology, or may be in the form of an electromechanical data storage, such as a hard drive, or may alternatively also be a server based data storage, such as a storage place accessible via the internet.

Hereby such a coverage map can be used for providing estimation information an estimated magnitude of a specific crop coverage to the control unit in subsequent mowing operations.

In one embodiment of an agricultural mowing apparatus according to the first aspect of the present invention said image capturing device(s) is/are arranged in front of said cutting mechanism(s), relative to the working direction of said agricultural mowing apparatus; and/or wherein said image capturing device(s) is/are arranged at a position corresponding to a distance from said cutting mechanism(s) in a direction being perpendicular working direction of said agricultural mowing apparatus.

Such embodiments allow for capturing the images before the biomass is being cut by the cutting mechanism(s).

In one embodiment of an agricultural mowing apparatus according to the first aspect of the present invention said control unit is being coupled to a speed sensor for providing information relating to the speed of travel over ground of said agricultural field by said agricultural mowing apparatus.

In one embodiment of an agricultural mowing apparatus according to the first aspect of the present invention said control unit is being configured to provide said height adjustment signal to said height adjustment means of said cutting mechanism at a delay commensurate with the speed of travel over ground of said agricultural mowing apparatus; thereby taking into account the time lapse from the moment in time at which an image of a specific portion of said agricultural field is captured by said image capturing device to the moment in time at which the cutting mechanism arrives at that specific portion of said agricultural field; so that said specific portion of said agricultural field is being cut at a cutting height which is optimum, as based on said image analysis being performed by said image processing device in respect of that specific portion of said agricultural field.

Hereby it can be assured that the cutting height of the cutting mechanism(s) will be adjusted according to an optimum height in respect of a specific portion of the agricultural field at the time where the cutting mechanism(s) arrive at that specific position of the agricultural field.

In one embodiment of an agricultural mowing apparatus according to the first aspect of the present invention said cutting mechanism(s) each is having a cutting width of 100 - 2000 cm, such as 200 - 1900 cm, e.g. 300 - 1800 cm, e.g. 400 - 1700 cm, such as 500 - 1600 cm, for example 600 - 1500 cm, e.g. 700 - 1400 cm, such as 800 - 1300 cm, for example 900 - 1200 cm or 1000 - 1100 cm.

Such cutting widths will provide efficient mowing.

In one embodiment of an agricultural mowing apparatus according to the first aspect of the present invention the focus area of said image capturing device(s) (6) of the surface of said agricultural field (4) is having a width, in a direction perpendicular to the direction of movement of said agricultural mowing apparatus, of 1 - 300 cm, such as 5 - 250 cm, for example 10 - 200 cm, e.g. 25 - 150 cm, such as 50 - 100 cm.

In one embodiment of an agricultural mowing apparatus according to the first aspect of the present invention said image capturing device is configured for repeatedly image capturing.

In one embodiment of an agricultural mowing apparatus according to the first aspect of the present invention said image capturing device is configured for capturing images at a rate of 0.01 - 60, such as 0.5 - 40, such as 1 - 30, e.g. 5 - 20, such as 10 - 15 frames per second (fps).

In one embodiment of an agricultural mowing apparatus according to the first aspect of the present invention said image processing device is configured for analysing images at a rate of 0.01 - 30, such as 0.5 - 25, such as 1 - 20, e.g. 5 - 18, such as 10 - 15 frames per second (fps).

These rates provides for rapidly updated provision of information and hence provide for a more accurate estimation of the magnitude of a specific crop coverage of part of the field specifically and the field as a whole generally.

In one embodiment of an agricultural mowing apparatus according to the first aspect of the present invention said control unit is coupled to input means, such as in the form of a keyboard for allowing an operator to set up and program said control unit.

In one embodiment of an agricultural mowing apparatus according to the first aspect of the present invention said control unit is coupled to display means, such as in the form of a monitor for allowing an operator to monitor the set up and operation of said agricultural mowing apparatus.

These two embodiments provide for better controlling the operation of the mowing apparatus.

In one embodiment of an agricultural mowing apparatus according to the first aspect of the present invention said height adjustment means comprises an actuator, such as a hydraulic actuator, an electric actuator or a pneumatic actuator.

In one embodiment of an agricultural mowing apparatus according to the first aspect of the present invention said control unit is configured for providing said height adjustment signal in the form of an electric signal, and wherein said height adjustment means comprises a hydraulic actuator and wherein said height adjustment means comprises a hydraulic valve configured for adjusting said hydraulic actuator by means of said height adjustment signal.

Such types of actuators and regulators efficiently will provide for adjustment of the cutting height of the cutting provided by one or more of the cutting mechanisms.

In one embodiment of an agricultural mowing apparatus according to the first aspect of the present invention said cutting mechanism comprises a sensor for sensing the current cutting height of the cutting mechanism and wherein said sensor is coupled to said control unit for providing information to said control unit relating to a current cutting height of the cutting mechanism.

Hereby the control unit may continuously monitor the setting of the cutting height of or more of the cutting mechanisms.

In one embodiment of an agricultural mowing apparatus according to the first aspect of the present invention said image processing device is configured to perform the following steps:
i) receive information representing an image captured by said image capturing device;
ii) in respect of said representation of said image, performing an image analysis in order to distinguish areas of that image which represents grass and/or clover and/or weed;
iii) summing up all areas determined in step ii) which represent grass and/or summing up all areas determined in step ii) which represent clover and/or summing up all areas determined in step ii) which represent weed;
iv) on the basis of the summing up performed in step iii), providing in respect of said image, said estimation information to be send to said control unit.

Hereby the image processing device may provide to said data storage the magnitude of a specific crop coverage in a specific portion of the agricultural field.

In one embodiment of the apparatus of the first aspect of the present invention step ii) is based on analysis of image patch features, such as colour distinction, edge detection of different plant material and morphology of different plant material, use of texture analysis filter(s), or entropy of image patches, making up such image.

In one embodiment of the apparatus of the first aspect of the present invention step ii) is performed by having said image processing device configured for consulting a representation of a set of learning images, wherein each learning image in the set of learning images comprises a representation of a real image or an artificial image, such as a computer generated image, of a portion of an agricultural field comprising grass and clover and optionally also weed, and wherein distinct elements of said image has been allocated with information relating to which type of plant (grass, clover and optionally weed) that this element represents.

In one embodiment of the apparatus of the first aspect of the present invention step ii) is performed by having said image processing device configured for consulting a representation of learning images in the form of a model capable of performing an algorithm in order to distinguish areas of that image which represents grass and/or clover and/or weed.

In one embodiment of the apparatus of the first aspect of the present invention said model is being configured for utilizing analysisof image patch features as defined above.

In one embodiment of the apparatus of the first aspect of the present invention said calculated image patch features are being analysed utilizing a numerical mathematical model based on support vector machines, k-nearest neighbours, decision trees, adaboost, gaussian mixture models or linear discriminant analysis in order to distinguish areas of that image as being as either grass and/or clover and/or weed.

In one embodiment of the apparatus of the first aspect of the present invention said image processing device is configured for utilizing deep learning algorithms and/or artificial intelligence and/or neural network(s).

These techniques for performing the processing of the image processing device provides for providing the estimation information in an efficient way.

### The second aspect of the present invention

In a second aspect the present invention relates to a use of an agricultural mowing apparatus according to the first aspect for cutting grass and clover in an agricultural field.

In one embodiment of the use according to the second aspect of the present invention said apparatus is used in the process of producing a biomass feedstock for silage.

### The third aspect of the present invention

In a third aspect the present invention relates to a method for optimizing harvested biomass yield from an agricultural grass and clover field, wherein said method comprises:
i) cutting said agricultural field comprising grass and clover by using a mowing apparatus;
ii) while cutting said agricultural field, using an image processing device for providing estimation information relating to an estimated magnitude of a specific crop coverage being present in the portion of the agricultural field to be cut;
iii) on the basis of the estimation information as provided in step ii), adjusting the cutting height of the cutting mechanism of said mowing apparatus in order to obtain an optimum cutting height of said portion of the field to be cut.

In one embodiment of the method according to the third aspect of the present invention said estimation information is relating to an estimated magnitude of a specific crop coverage is independently selected from the group comprising:
- coverage of grass; and/or
- coverage of clover; and/or
- coverage of weed; and/or
- a ratio relating to: coverage of grass / coverage of clover; and/or
- a ratio relating to: coverage of grass / coverage of clover / coverage of weed.

Using these definitions of the estimation information will in a reliable manner provide information as to the grass coverage and/or the clover coverage of the agricultural field.

In one embodiment of the method according to the third aspect of the present invention said adjustment of said cutting height of said cutting mechanism performed in step iii) is being performed in such a way that a relatively high estimated magnitude of grass coverage and/or a relatively low estimated magnitude of clover coverage leads to a relatively low cutting height of said cutting mechanism, whereas a relatively low estimated magnitude of grass coverage and/or a relatively high estimated magnitude of clover coverage leads to a relatively high cutting height of said cutting mechanism.

Such a height adjustment scheme provides for achieving a higher yield of a biomass of grass and clover growing in the field.

In one embodiment of the method according to the third aspect of the present invention said adjustment of the cutting height of said cutting mechanism of said mowing apparatus as performed in step iii) is based on a predetermined cutting height adjustment algorithm. Hereby the cutting height can be adjusted according to a predetermined cutting height scheme, depending on the specific crop coverage of grass and/or clover.

In one embodiment of the method according to the third aspect of the present invention said predetermined cutting height adjustment algorithm is based on a correlation between said estimation information on the one hand and an optimum cutting height on the other hand.

Such an algorithm will ultimately lead to a higher yield of grass and/or clover during several cycles of cutting the biomass of the field.

In one embodiment of the method according to the third aspect of the present invention said method is being performed by using an apparatus according to the first aspect of the present invention.

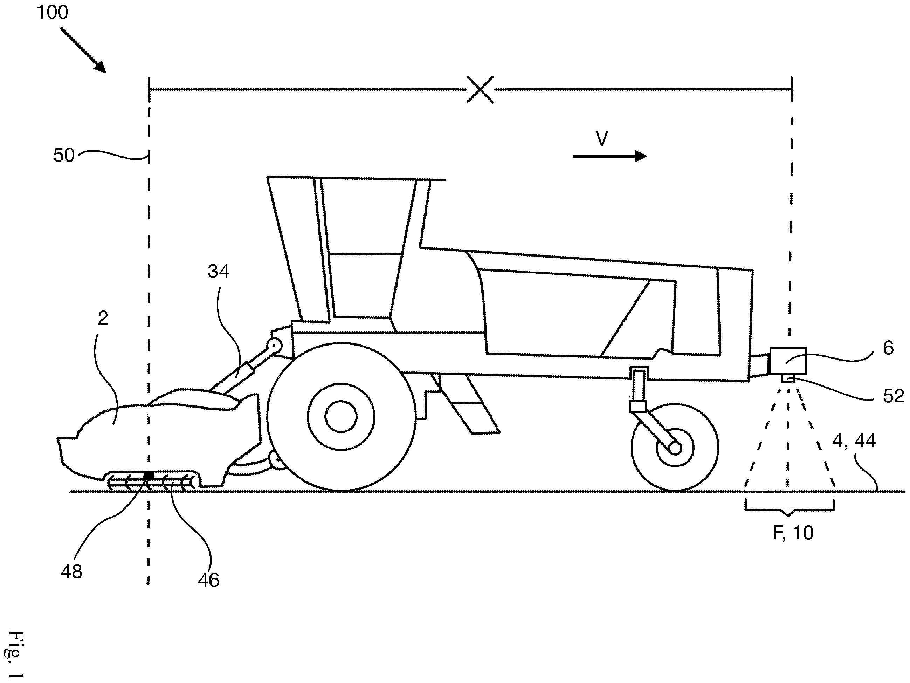

Referring now to the drawings for illustrating the present invention, Fig. 1 shows in a side view an agricultural mowing apparatus according to the first aspect of present invention.

The mowing apparatus 100 comprises a tractor carrying a cutting mechanism 2 at a rear part thereof. The mowing apparatus is shown in a mowing situation in which the tractor moves over ground 44 on the agricultural field 4.

The cutting mechanism 2 is configured for cutting grass and clover on an agricultural field. The cutting mechanism is coupled to the tractor via an actuator 34 which may be a hydraulic actuator.

By varying the extraction/compression of the actuator 34 the cutting height of the cutting mechanism may be adjusted.

The cutting itself of the grass and clover is being performed by a cutting knife 46 which rotates around an axle 48 defining a rotational axis 50.

Other types and orientations of cutting knives may be used as well with the present invention,

Also seen in Fig. 1 is that that the mowing apparatus comprises an image capturing device 6 which is arranged at a front end of the tractor. The optics 52 of the image capturing device 66 is directed towards an area of the ground which represents the focus area F of the optics 52 of the image capturing device. This area F accordingly represents a portion 10 of the agricultural field 4.

During operation of the mowing apparatus images 8 are repeatedly being captured by the image capturing device 6. The information representing the images is being sent to a control unit (not shown in Fig. 1) which subsequently directs this information to an image processing device (not shown in Fig. 1). The image processing device provides estimation information 20 relating to a specific crop coverage being present in that specific portion 10 of the agricultural field which corresponds to the focus area F.

The specific crop coverage of the focus area F which is being estimated by image processing device may for example relate to the magnitude of coverage of grass in the focus area F. Alternatively, the specific crop coverage of the focus area F may relate to the magnitude of coverage of clover in the focus area F. Still alternatively, the specific crop coverage of the focus area F may relate to a ratio of coverage of grass:coverage of clover.

Based on information relating to a correlation of an optimum cutting height as dependent on a specific crop coverage being present in a specific portion 10 of the agricultural field 4, the cutting height of the cutting mechanism 2 will be adjusted so as to correspond to that optimum cutting height which corresponds to the estimation information relating to the specific crop coverage in the focus area F as provided by the image processing device and being based on the image captured by the image capturing device 6.

It is seen in Fig. 1 that the distance between the center of the focus area F and the axle 48 of the cutting knife 46 is X.

Assuming that the tractor moves in a direction from left to right at a constant velocity V, it is clear that it takes the time interval "X/V" before the cutting knives arrives at the focus area F.

Now, assuming that the whole mowing apparatus is working in "real time" in the sense that there will be no inherent sluggishness from the point in time where the image capturing device 6 is capturing an image and to the point in time where the cutting mechanism 2 has provided a response thereto. In such a situation, a delay D should be introduced, so that the with reference to the time To at which an image is captured, the adjustment of the cutting height of the cutting mechanism 2 should be effected at time T = To + D = To +X/V

In the case, where some kind of inherent sluggishness is incorporated in the system so that the whole mowing apparatus is not able to working in "real time", then again with reference to the time To at which an image is captured, the adjustment of the cutting height of the cutting mechanism 2 should be effected at time T = To +X/V - S; wherein S is being the duration of the sluggishness.

Although the apparatus of the first aspect of the present invention has been defined in a way where the image capturing device is comprised in the apparatus, it should be noted that the image capturing device in some specific embodiments may be arranged in a drone which has been configured for flying over the agricultural filed and wherein information relating to the captured images or wherein the estimation information is being wirelessly sent to the control unit of the agricultural mowing apparatus.

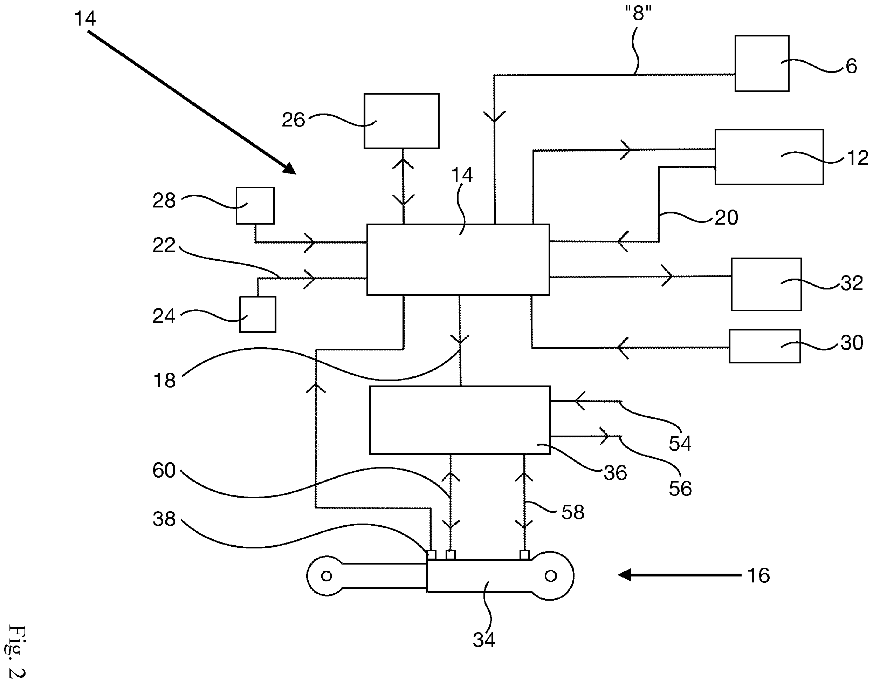

Fig. 2 schematically illustrates the working mode of an agricultural mowing apparatus 100 according to the first aspect of the present invention. Fig. 2 shows an image capturing device 6 which is configured for sending information relating to images captured to a control unit 14. The control unit 14 is connected to input means 30, such as an alphanumeric keyboard which may be used for setting up and altering the settings of the operation of the control unit 14. A display 32, such as a monitor is also connected to the control unit 14. The display allows an operator to monitor the settings and the operation of part of the control unit and optionally also of the mowing apparatus.

The control unit 14 is connected to the electronically controlled hydraulic valve 36 which comprises an input hose 54 for pressurized hydraulic fluid from a hydraulic pump. The hydraulic valve 36 also comprises a return hose 56 for pressurized hydraulic fluid.

Furthermore, the electronically controlled hydraulic valve 36 is via hoses 58 and 60 connected to the hydraulic actuator 34.

A sensor 38 arranged at the hydraulic actuator is configured for providing the control unit 14 with information relating to the degree of extraction of that hydraulic actuator 34.

During use the image capturing device 6 captures an image 8 and directs the information (in Fig. 2 denoted as "8" as this information is a representation of an image 8) relating to such an image to the control unit 14 which in turn redirects this information to the image processing device12. The image processing device 12 analyses the representation of the image received and on the basis of this analysis the image processing device12 returns to the control unit 14 estimation information 20 relating to an estimated magnitude of a specific crop coverage of the portion of the agricultural field 4 corresponding to the captured image 8.

In other embodiments the image capturing device 6 and the image processing device 12 may be integrated in a single distinct unit, where the information relating to an image captured by image capturing device 6 is being sent directly to the image processing device12.

The control unit 14 has been preprogrammed so as to make sure that the cutting height of the cutting mechanism of the agricultural mower is being adjusted depending on estimation information 20 being provided thereto.

Such a predetermined cutting height adjustment algorithm may in a simple form and for a given type of grass and a given type of clover growing in a given climate representing a given typical temperature range and a given amount of sunlight and precipitation and growing in a given type of soil be represented by the Table 1 below.

**Table 1**

| **Grass:clover ratio** | **Optimum cutting height** |
|---|---|
| High, e.g. above 60/40 | 3 - 6 cm |
| Medium, e.g. 40/60 - 60/40 | 6 - 8 cm |
| Low, e.g. below 40/60 | 8 - 10 cm |

Table 1 simple sets out in, respect of a number of ranges of grass/clover ratios, which are being estimated, an optimum cutting height of the cutting mechanism of the agricultural mowing apparatus.

Based on such a cutting height adjustment algorithm the control unit 14 which is continuously being provided with information from the sensor 38 relating to the degree of expansion of the hydraulic actuator 34 will then be able to determine whether or not an adjustment of the cutting height of the cutting mechanism 2 of the mowing apparatus 100 is needed, and in such a case, whether such an adjustment involves a lowering or a raising of the cutting mechanism 2 and how much lowering or raising.

Based on this determination the control unit14 sends an electric signal 18 to the hydraulic valve 36 which may, in response thereto, effect an expansion or contraction of the hydraulic actuator 34, as the case may be.

As the hydraulic actuator is coupled to a suspension of the cutting mechanism 2, such an expansion or contraction of the hydraulic actuator 34 implies either a raising or a lowering of the cutting mechanism 2, and hence an adjustment of the cutting height of the mowing apparatus 100.

It is seen in Fig. 2 that the control unit 14 furthermore is coupled to a speed sensor 28 which senses the speed of travel over ground of the agricultural mowing apparatus 100.

It is also seen in Fig. 2 that the control unit 14 is coupled to global navigational satellite system (GNSS) 24, such as a GPS unit and thereby enables gaining information 22 of the location of the agricultural mowing apparatus. It is preferred that the receiver of the GNSS unit is placed in vicinity of or above the focus area F of image capturing device 6.

Also a data storage 26 is coupled to the control unit 14.

When the agricultural mowing apparatus 100 is provided with a data storage 26 and a global navigational satellite system (GNSS) 24 the control unit may be configured to allocate coordinates relating to a geographical position of said images 8 being captured on the one hand and an estimated magnitude of a specific crop coverage on the other hand; thereby making this correlation representing a specific coverage map of said agricultural field or part thereof in respect of that specific crop.

This information can be useful in that it has been found out that the severity of subsequent conditioning treatments of the harvested grass and clover advantageously may be varied depending on a specific crop coverage being present at a specific portion of the agricultural field.

It should be noted that whereas a numerical correspondence between an estimated magnitude of a specific crop coverage of a portion 10 of the agricultural field 4 corresponding to a captured image 8 on the one hand and an optimum cutting height on the other hand will provide for the most optimum increase in overall yield of crop in a grass and clover field during several cycles of growing and harvesting, even a qualitative adjustment of the cutting height of the cutting mechanism 2 of the agricultural mowing apparatus 100 in response to the estimation information will provide significant increases in crop yield.

By the term "qualitative adjustment of the cutting height of the cutting mechanism" shall be understood a simple cutting scheme which is conducted according to the following instructions:
- Whenever the crop coverage of grass increases; or the crop coverage of clover decreases, the cutting height is to be lowered;
- Whenever the crop coverage of grass decreases; or the crop coverage of clover increases, the cutting height is to be raised.

Accordingly, even in a case where the most optimum cutting height has not been quantitatively and numerically correlated to a corresponding estimated magnitude of aspecific crop coverage, it will be possible to benefit and take great advantage of the present invention.

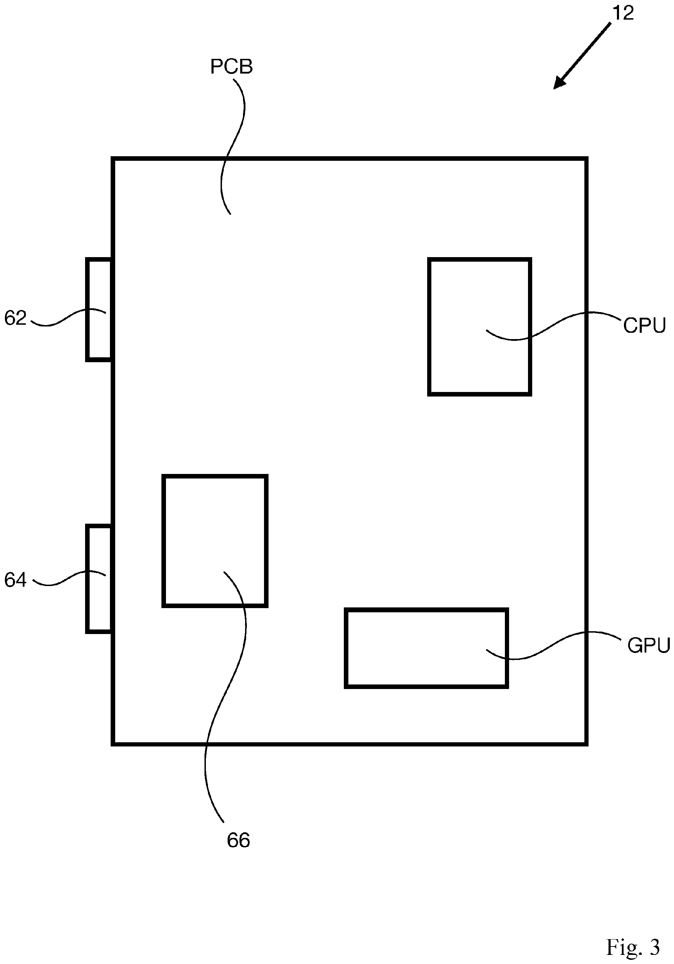

Fig. 3 is a schematic illustration serving the purpose, at a very general level, of explaining the working mode of the image processing device which is included in the mowing apparatus according to the present invention. The image processing device 12 comprises a printed circuit board PCB comprising a range of electronic components. For the sake of simplicity only a few of these components are shown in Fig. 3.

The circuit board PCB of the image processing device 12 comprises an input port 62 for providing an electronic signal representing an image 8 originating from the image capturing device 6 of the mowing apparatus.

Additionally, the printed circuit board PCB of the image processing device comprises an output port 64 for providing an electronic signal representing estimation information 20 relating to an estimated magnitude of a specific crop coverage being present in that portion 10 of an agricultural field 4 which corresponds to that specific image 8 being processed by said image processing device 12.

A central processing unit CPU in the circuit board provides for controlling the operation of the image processing device.

Also included in the printed circuit board PCB of the image processing device 12 is a graphic processing unit GPU. The graphic processing unit GPU is responsible for performing the operations relating to the image processing.

The circuit board PCB of the image processing device also comprises a data storage 66. The data storage 66 has been supplied with a representation of learning data which will aid the image processing device 12 in providing the estimation information 20 relating to an estimated magnitude of a specific crop coverage being present in that portion 10 of an agricultural field 4 which corresponds to image 8 being processed by said image processing device.

It is preferred that the representation of learning data which is stored in the data storage 66 is being in the form of a model of learning data. Such a model of learning data may be computer program product embedded in said data storage 66 and being able to perform an algorithm for image processing of information relating to an image being analyzed by said image processing device 12.

For the purpose of understanding the concept of the image processing device, such an algorithm based on the learning data may obtained by analyzing a set 40 of learning images each of which represents a learning image 42 of an agricultural field comprising grass and clover.

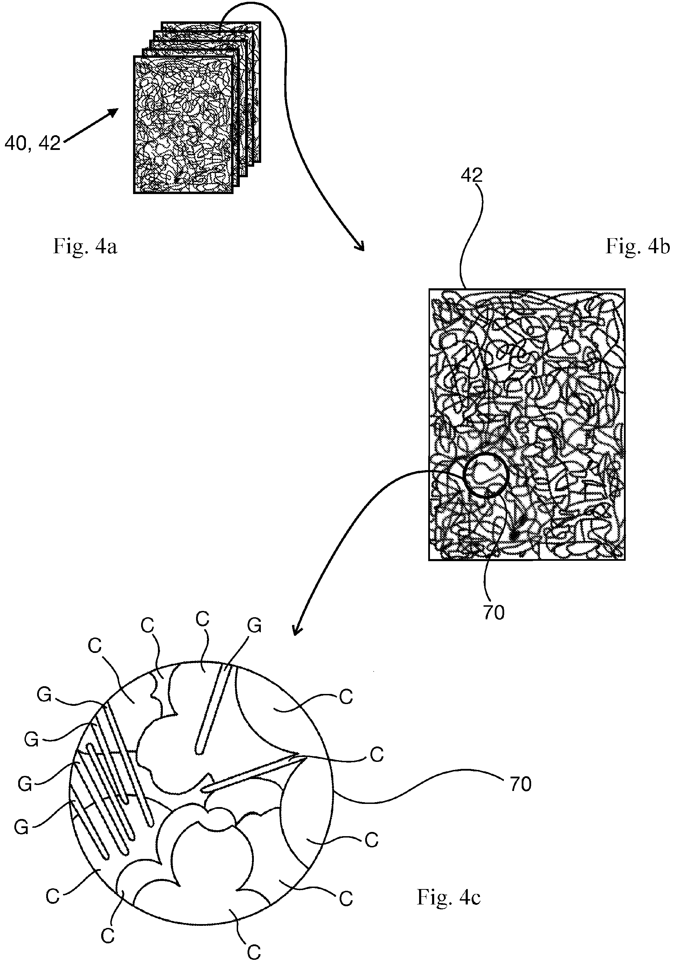

The concept of learning images is illustrated in Fig. 4a, 4b and 4c.

Fig. 4a illustrates such a set 40 of learning images 42 which for the sake of simplicity comprises only five learning images 42.

Fig. 4b illustrates the middle learning image 42 of the five learning images from Fig. 4a.

Fig. 4c is a close-up depiction of a portion 70 of the learning image 42 in Fig. 4b. Such a portion may represent an image patch comprising a relatively limited number of image pixels.

Fig. 4c shows that the learning data in the learning image 42 shown in Fig. 4b comprises an array of different elements of plant material which have been annotated so that each specific element in the learning image shown in Fig. 4c has been provided with information as to which type of plant (grass or clover) that specific element belongs to.

The annotation shown in Fig. 4C illustrates that clover material has been annotated "C", whereas grass material has been annotated "G".

Optionally, also information relating to annotations of weed could have been provided in the leaning date of the learning image shown in Fig. 4b. Such a weed annotation could have been "W" for weed.

Accordingly, the learning data represents an array of learning images 42,40 which have been annotated so as to assign the type of plant material (grass, clover and optionally also weed) to each element of each of the images of the learning data.

The set 43 of learning images 40 may be a set of real images or artificial images, such as a computer generated image, of a portion 10 of an agricultural field 4.

Based on such learning data originating from annotated images a model of learning data may be constructed and such a model of learning data may as already mentioned be a computer program product embedded in said data storage 66 and being able to perform an algorithm for image processing of information relating to an image being analyzed by said image processing device 12.

Now returning to Fig. 3: During operation of the agricultural mowing apparatus100 according to the present invention, when the image processing device via the input port receives information relating to an image 8 captured by the image capturing device 6, the CPU arranges for processing this information and the processing itself is being performed by the graphic processing unit GPU. This is brought about by allowing the model of the learning data stored in the data storage 68 of the image processing device to analyze that image.

In such an analysis operation, the image processing device 12 is assigning various elements of the image to various types of plants such as grass (G), clover (C) and weed (W).

The analysis performed by the image processing device may be based on analysis of patch features, such as colour distinction, edge detection of different plant material and morphology of different plant material, use of texture analysis filter(s), or entropy of image patches, making up the captured image.

Further, the analysis performed by the image processing device may be based utilizing a numerical mathematical model based on support vector machines, k-nearest neighbours, decision trees, adaboost, gaussian mixture models or linear discriminant analysis in order to distinguish areas of that image as being as either grass (G) and/or clover (C) and/or weed (W).

In the analysis performed deep learning algorithms and/or artificial intelligence and/or neural network(s) may also be used.

Moreover, in the analysis of the representation of the image 8 received, the image processing device 12 also provides for summing up the area of a specific crop coverage in that image. In this way, the image processing device provides for estimation information 20 relating to an estimated magnitude of a specific crop coverage being present in the portion 10 of the agricultural field 4 corresponding to said image 8.

The estimation information 20 relating to an estimated magnitude of a specific crop coverage may relate to one or more of the following: coverage of grass; and/or coverage of clover; and/or coverage of weed; and/or a ratio relating to: coverage of grass / coverage of clover; and/or a ratio relating to: coverage of grass / coverage of clover / coverage of weed. Although the process for operating the optical system in order to gain the estimation information 20 has been exemplified in a way where the image capturing device 6 is carried by an agricultural vehicle, it should be noted that the image capturing device in some specific embodiments may be arranged in a drone which has been configured for flying over the agricultural field and wherein information relating to the captured images or wherein the estimation information is being transferred, such as wirelessly transferred to the data storage 26 coupled to the control unit 14 of the apparatus 100.

It should be noted that image processing analysis have been known for many years and that a person skilled in the art will be able to provide the required equipment and the correct set up for performing such analysis.

Special reference is made to the following documents which specifically deal with image processing analysis of images of an agricultural field comprising grass and clover with the purpose of determining a clover grass ratio of a portion of such a field:
A. K. Mortensen et al., J. Imaging 2017, 3, 59; and
S. Skovsen et al., Sensors 2017, 2930.

### List of reference numerals

- 2: Cutting mechanism
- 4: Agricultural field
- 6: Image capturing device
- 8: Image captured by an image capturing device
- 10: Portion of an agricultural field
- 12: Image processing device
- 14: Control unit
- 16: Height adjustment means of a cutting mechanism of an agricultural mower
- 18: Height adjustment signal
- 20: Estimation information relating to an estimated magnitude of a specific crop coverage
- 22: GNSS signal
- 24: GNSS system
- 26: Data storage coupled to control unit
- 28: Speed sensor
- 30: Input means
- 32: Display means
- 34: Actuator
- 36: Hydraulic valve
- 38: Sensor
- 40: Set of learning images
- 42: Learning image
- 44: Ground of agricultural field
- 46: Cutting knife of cutting mechanism
- 48: Axle of cutting knife of cutting mechanism
- 50: Rotational axis of cutting knife of cutting mechanism
- 52: Optics of image capturing device
- 54: Input hose for pressurized hydraulic fluid
- 56: Return hose for pressurized hydraulic fluid
- 58,60: Hydraulic hose
- 62: Input port of image processing device
- 64: Output port of image processing device
- 66: Data storage of image processing device
- 70: Close up portion of a learning image
- 100: Agricultural mowing apparatus
- CPU: Central processing unit
- GPU: Graphic processing unit
- PCB: Printed circuit board
- V: Velocity
- X: Distance

## Claims

1. An agricultural mowing apparatus (100) comprising:
- a cutting mechanism (2) for cutting grass of an agricultural field (4);
- an image capturing device (6) configured for capturing images (8) of a portion (10) of an agricultural field;
- an image processing device (12) for analysing an image captured by said image capturing device (6);
- a control unit (14);
wherein said cutting mechanism (2) comprises height adjustment means (16) for adjustment of the cutting height of said cutting mechanism (2) in response to a height adjustment signal (18) being provided thereto;
**characterised in that**:
- said image processing device (12), in respect of an image (8) captured by said image capturing device is configured for analysing said image so as to provide estimation information (20) relating to an estimated magnitude of a specific crop coverage being present in said portion (10) of the agricultural field (4) corresponding to said image (8); - said control unit (14) being configured to receive said estimation information (20) from said image processing device (12);
- said control unit (14) is being configured to provide said height adjustment signal (18) to said height adjustment means (16) of said cutting mechanism (2), in response to said estimation information (20), thereby affecting an adjustment of the cutting height of said cutting mechanism (2) in response to a change in said estimated magnitude of said specific crop coverage of the portion (10) of the agricultural field (4) to be cut by said cutting mechanism (2).

2. An agricultural mowing apparatus (100) according to claim 1, wherein said estimation information (20) relating to an estimated magnitude of a specific crop coverage is independently selected from the group comprising:
- coverage of grass; and/or
- coverage of clover; and/or
- coverage of weed; and/or
- a ratio relating to: coverage of grass / coverage of clover; and/or
- a ratio relating to: coverage of grass / coverage of clover / coverage of weed.

3. An agricultural mowing apparatus (100) according to claim 1 or 2, wherein said control unit (14) being configured to provide said height adjustment signal (18) to said height adjustment means (16) of said cutting mechanism (2) in such a way that a relatively high estimated magnitude of grass coverage and/or a relatively low estimated magnitude of clover coverage corresponds to a relatively low cutting height of said cutting mechanisms (2), whereas a relatively low estimated magnitude of grass coverage and/or a relatively high estimated magnitude of clover coverage corresponds to a relatively high cutting height of said cutting mechanism (2);
and/or wherein said control unit (14) is being configured to provide said height adjustment signal (18) to said height adjustment means (16) of said cutting mechanism (2) according to a predetermined cutting height adjustment algorithm; wherein said predetermined cutting height adjustment algorithm optionally is based on a correlation between the said estimation information (20) on the one hand and an optimum cutting height on the other hand.

4. An agricultural mowing apparatus (100) according to any of the claims 1 - 3, wherein said apparatus comprises two or more image capturing devices (6) which collectively are configured for capturing images (8) of two or more portions (10) of said agricultural field (4);
wherein said two or more portions (10) of said agricultural field (4) are arranged relative to each other in a mutual staggered arrangement in a direction perpendicular to the moving direction of said mowing apparatus;
wherein said image processing device (12), in respect of an image (8) captured by each of said image capturing devices (6) is configured for analysing said image so as to provide an estimation information (20) relating to an estimated magnitude of a specific crop coverage being present in the portion (10) of the agricultural field (4) corresponding to each said image (8);
wherein said control unit (14) is being configured to receive an estimation information (20) from said image processing device (12) in respect of each said images (8);
wherein in respect of each of said images (8) being captured by said two or more image capturing devices (6) said control unit is being configured to provide a height adjustment signal (18) to that specific height adjustment means (16) of said cutting mechanism (2) which is being responsible for cutting the portion of said agricultural field corresponding to that specific image (8), based on said specific estimation information (20).

5. An agricultural mowing apparatus (100) according to any of the claims 1 - 4, wherein said control unit (14) is configured for receiving a signal (22) from a global navigation satellite system (GNSS) (24), such as a GPS signal; wherein said control unit (14) optionally is coupled to a data storage (26), wherein said control unit is being configured to allocate said estimation information (20) which is being provided in respect of said images (8) being captured; and wherein said control unit (14) is being configured to allocate coordinates relating to a geographical position of said images (8) being captured; and wherein said control unit (14) is being configured for storing on said data storage (26) a correlation between an estimated magnitude of a specific crop coverage on the one hand and positions on the other hand; said correlation thereby representing a specific coverage map of said agricultural field or part thereof.

6. An agricultural mowing apparatus (100) according to any of the claims 1 - 5, wherein said image capturing device(s) (6) is/are arranged in front of said cutting mechanism(s) (2), relative to the working direction of said agricultural mowing apparatus (100); and/or wherein said image capturing device(s) (6) is/are arranged at a position corresponding to a distance from said cutting mechanism(s) (2) in a direction being perpendicular working direction of said agricultural mowing apparatus (100).

7. An agricultural mowing apparatus (100) according to any of the claims 1 -6, wherein said control unit (14) is being coupled to a speed sensor (28) for providing information relating to the speed of travel over ground of said agricultural field (4) by said agricultural mowing apparatus.

8. An agricultural mowing apparatus (100) according to any of the claims 1 - 7, wherein said control unit (14) is being configured to provide said height adjustment signal (18) to said height adjustment means (16) of said cutting mechanism (2) at a delay (D) commensurate with the speed of travel (V) over ground of said agricultural mowing apparatus; thereby taking into account the time lapse (T) from the moment in time at which an image (8) of a specific portion 810) of said agricultural field (4) is captured by said image capturing device (6) to the moment in time at which the cutting mechanism (2) arrives at that specific portion (10) of said agricultural field (4); so that said specific portion (10) of said agricultural field (4) is being cut at a cutting height which is optimum, as based on said image analysis being performed by said image processing device (12) in respect of that specific portion (10) of said agricultural field (4).

9. An agricultural mowing apparatus (100) according to any of the claims 1 - 8, wherein said image capturing device (6) is configured for repeatedly image capturing.

10. An agricultural mowing apparatus (100) according to any of the claims 1 - 9, wherein said control unit (14) is coupled to input means (30), such as in the form of a keyboard for allowing an operator to set up and program said control unit (14);
and/or wherein said control unit is coupled to display means (32), such as in the form of a monitor for allowing an operator to monitor the set up and operation of said agricultural mowing apparatus (100).

11. An agricultural mowing apparatus (100) according to any of the claims 1 - 10 wherein said cutting mechanism (2) comprises a sensor (38) for sensing the current cutting height of the cutting mechanism (2) and wherein said sensor is coupled to said control unit (14) for providing information to said control unit relating to a current cutting height of the cutting mechanism.

12. An agricultural mowing apparatus (100) according to any of the claims 1 - 11, wherein said image processing device (12) is configured to perform the following steps:
i) receive information representing an image (8) captured by said image capturing device (6);
ii) in respect of said representation of said image, performing an image analysis in order to distinguish areas of that image which represents grass (g) and/or clover (C) and/or weed (W);
iii) summing up all areas determined in step ii) which represent grass (G) and/or summing up all areas determined in step ii) which represent clover (C) and/or summing up all areas determined in step ii) which represent weed (W);
iv) on the basis of the summing up performed in step iii), providing in respect of said image, said estimation information (20) to be send to said control unit;
wherein step ii) optionally is being based on analysis of image patch features, such as colour distinction, edge detection of different plant material and morphology of different plant material, use of texture analysis filter(s), or entropy of image patches, making up such image;
and/or wherein step ii) optionally is being performed by having said image processing device (12) configured for consulting a representation of a set of learning images (40), wherein each image (42) in the set of learning images (40) comprises a representation of a real image or an artificial image, such as a computer generated image, of a portion (10) of an agricultural field (4) comprising grass and clover and optionally also weed, and wherein distinct elements of said image has been allocated with information relating to which type of plant (grass (G), clover (C) and optionally weed (W)) that this element represents;
and/or wherein step ii) optionally is being performed by having said image processing device (12) configured for consulting a representation of learning images in the form of a model capable of performing an algorithm in order to distinguish areas of that image which represents grass (G) and/or clover (C) and/or weed (W).

13. An agricultural mowing apparatus (100) according to claim 12 , wherein said image processing device (12) is configured for utilizing deep learning algorithms and/or artificial intelligence and/or neural network(s).

14. Use of an agricultural mowing apparatus (100) according to any of the claims 1 - 13 for cutting grass and clover in an agricultural field (4).

15. A method for optimizing harvested biomass yield from an agricultural grass and clover field (4), wherein said method comprises:
i) cutting said agricultural field (4) comprising grass and clover by using a mowing apparatus;
ii) while cutting said agricultural field (4), using an image processing device for providing estimation information (20) relating to an estimated magnitude of a specific crop coverage being present in the portion (10) of the agricultural field (4) to be cut;
iii) on the basis of the estimation information (20) as provided in step ii), adjusting the cutting height of the cutting mechanism of said mowing apparatus in order to obtain an optimum cutting height of said portion of the field to be cut.

## Patentansprüche

1. Landwirtschaftliche Mäheinrichtung (100) umfassend:
- einen Schneidemechanismus (2) zum Schneiden von Gras eines landwirtschaftlichen Felds (4);
- eine Bildaufnahmevorrichtung (6), die zum Aufnehmen von Bildern (8) eines Teils (10) eines landwirtschaftlichen Felds ausgebildet ist;
- eine Bildverarbeitungsvorrichtung (12) zum Analysieren eines Bildes, das von der Bildaufnahmevorrichtung (6) aufgenommen wurde;
- eine Steuereinheit (14);
wobei der Schneidemechanismus (2) Höheneinstellungsmittel (16) zum Einstellen der Schnitthöhe des Schneidemechanismus (2) in Reaktion auf ein ihm bereitgestelltes Höheneinstellungssignal (18) umfasst; **dadurch gekennzeichnet, dass**:
- die Bildverarbeitungsvorrichtung (12), in Bezug auf ein Bild (8), das von der Bildaufnahmevorrichtung aufgenommen wurde, zum Analysieren des Bilds ausgebildet ist, um Schätzinformationen (20), die sich auf eine geschätzte Größe einer bestimmten Nutzpflanzenflächendeckung beziehen, die in dem Teil (10) des landwirtschaftlichen Felds (4) vorhanden ist, entsprechend dem Bild (8) bereitzustellen;
- die Steuereinheit (14) zum Empfangen der Schätzinformationen (20) von der Bildverarbeitungsvorrichtung (12) ausgebildet ist;
- die Steuereinheit (14) zum Bereitstellen des Höheneinstellungssignals (18) an die Höheneinstellungsmittel (16) des Schneidemechanismus (2) in Reaktion auf die Schätzinformationen (20) ausgebildet ist, wodurch ein Einstellen der Schnitthöhe des Schneidemechanismus (2) in Reaktion auf eine Änderung in der geschätzten Größe der bestimmten Nutzpflanzenflächendeckung des Teils (10) des landwirtschaftlichen Felds (4) beeinflusst wird, der von dem Schneidemechanismus (2) geschnitten werden soll.

2. Landwirtschaftliche Mäheinrichtung (100) nach Anspruch 1, wobei die Schätzinformationen (20), die sich auf eine geschätzte Größe einer bestimmten Nutzpflanzenflächendeckung beziehen, unabhängig ausgewählt sind aus der Gruppe, umfassend:
- Grasflächendeckung; und/oder
- Kleeflächendeckung; und/oder
- Unkrautflächendeckung; und/oder
- ein Verhältnis in Bezug auf: Grasflächendeckung / Kleeflächendeckung; und/oder
- ein Verhältnis in Bezug auf: Grasflächendeckung / Kleeflächendeckung / Unkrautflächendeckung.

3. Landwirtschaftliche Mäheinrichtung (100) nach Anspruch 1 oder 2, wobei die Steuereinheit (14) zum Bereitstellen des Höheneinstellungssignals (18) an das Höheneinstellungsmittel (16) des Schneidemechanismus (2) in derartiger Weise ausgebildet ist, dass eine relativ hohe geschätzte Größe einer Grasflächendeckung und/oder eine relativ niedrige geschätzte Größe von Kleeflächendeckung einer relativ niedrigen Schnitthöhe der Schneidemechanismen (2) entspricht, während eine relativ niedrige geschätzte Größe von Grasflächendeckung und/oder eine relativ hohe geschätzte Größe von Kleeflächendeckung einer relativ hohen Schnitthöhe des Schneidemechanismus (2) entspricht;
und/oder wobei die Steuereinheit (14) zum Bereitstellen des Höheneinstellungssignals (18) an das Höheneinstellungsmittel (16) des Schneidemechanismus (2) gemäß einem vorbestimmten Schnitthöheneinstellungsalgorithmus ausgebildet ist; wobei der vorbestimmte Schnitthöheneinstellungsalgorithmus optional auf einer Korrelation zwischen den Schätzinformationen (20) einerseits und einer optimalen Schnitthöhe andererseits beruht.

4. Landwirtschaftliche Mäheinrichtung (100) nach einem der Ansprüche 1-3, wobei die Einrichtung zwei oder mehr Bildaufnahmevorrichtungen (6) umfasst, die gemeinsam ausgebildet sind, Bilder (8) von zwei oder mehr Teilen (10) des landwirtschaftlichen Felds (4) aufzunehmen;
wobei die zwei oder mehr Teile (10) des landwirtschaftlichen Felds (4) relativ zueinander in einer wechselseitig versetzten Anordnung in einer Richtung senkrecht zu der Mährichtung der Mäheinrichtung angeordnet sind;
wobei die Bildverarbeitungsvorrichtung (12), in Bezug auf ein Bild (8), das von jeder der Bildaufnahmevorrichtungen (6) aufgenommen wurde, zum Analysieren des Bilds ausgebildet ist, um Schätzinformationen (20) bereitzustellen, die sich auf eine geschätzte Größe einer bestimmten Nutzpflanzenflächendeckung beziehen, die in dem Teil (10) des landwirtschaftlichen Felds (4) vorhanden ist, der jedem Bild (8) entspricht;
wobei die Steuereinheit (14) zum Empfangen von Schätzinformationen (20) von der Bildverarbeitungsvorrichtung (12) in Bezug auf jedes der Bilder (8) ausgebildet ist;
wobei in Bezug auf jedes der von den zwei oder mehr Bildaufnahmevorrichtungen (6) aufgenommenen Bilder (8) die Steuereinheit zum Bereitstellen eines Höheneinstellungssignals (18) an das bestimmte Höheneinstellungsmittel (16) des Schneidemechanismus (2), der zum Schneiden des Teils des landwirtschaftlichen Felds entsprechend dem bestimmten Bild (8) verantwortlich ist, basierend auf den bestimmten Schätzinformationen (20) ausgebildet ist.

5. Landwirtschaftliche Mäheinrichtung (100) nach einem der Ansprüche 1-4, wobei die Steuereinheit (14) zum Empfangen eines Signals (22) von einem globalen Navigationssatellitensystem (GNSS) (24) ausgebildet ist, wie eines GPS-Signals; wobei die Steuereinheit (14) optional an einen Datenspeicher (26) gekoppelt ist, wobei die Steuereinheit zum Zuordnen der Schätzinformationen (20) ausgebildet ist, die in Bezug auf die aufgenommenen Bilder (8) bereitgestellt werden; und wobei die Steuereinheit (14) zum Zuordnen von Koordinaten ausgebildet ist, die sich auf eine geografische Position der aufgenommenen Bilder (8) beziehen; und wobei die Steuereinheit (14) zum Speichern in dem Datenspeicher (26) einer Korrelation zwischen einer geschätzten Größe einer bestimmten Nutzpflanzenflächendeckung einerseits und Positionen andererseits ausgebildet ist; wobei die Korrelation dadurch eine bestimmte Flächendeckungskarte des landwirtschaftlichen Felds oder eines Teils davon darstellt.

6. Landwirtschaftliche Mäheinrichtung (100) nach einem der Ansprüche 1-5, wobei die Bildaufnahmevorrichtung(en) (6) vor dem Schneidemechanismus (den Schneidemechanismen) (2), relativ zu der Arbeitsrichtung der landwirtschaftlichen Mäheinrichtung (100) angeordnet ist (sind); und/oder wobei die Bildaufnahmevorrichtung(en) (6) an einer Position entsprechend einem Abstand von dem Schneidemechanismus (den Schneidemechanismen) (2) in einer Richtung senkrecht zu der Arbeitsrichtung der landwirtschaftlichen Mäheinrichtung (100) angeordnet ist (sind).

7. Landwirtschaftliche Mäheinrichtung (100) nach einem der Ansprüche 1-6, wobei die Steuereinheit (14) an einen Geschwindigkeitssensor (28) gekoppelt ist, um Informationen, die sich auf die Fahrgeschwindigkeit über Boden des landwirtschaftlichen Felds (4) der landwirtschaftlichen Mäheinrichtung beziehen, bereitzustellen.

8. Landwirtschaftliche Mäheinrichtung (100) nach einem der Ansprüche 1-7, wobei die Steuereinheit (14) zum Bereitstellen des Höheneinstellungssignals (18) an die Höheneinstellungsmittel (16) des Schneidemechanismus (2) bei einer Verzögerung (D) ausgebildet ist, die der Fahrgeschwindigkeit (V) über Boden der landwirtschaftlichen Mäheinrichtung angemessen ist; wodurch die verstrichene Zeit (T) ab dem Zeitpunkt, zu dem ein Bild (8) eines bestimmten Teils (10) des landwirtschaftlichen Felds (4) von der Bildaufnahmevorrichtung (6) aufgenommen wurde, bis zu dem Zeitpunkt, zu dem der Schneidemechanismus (2) an diesem bestimmten Teil (10) des landwirtschaftlichen Felds (4) eintrifft, berücksichtigt wird; sodass der bestimmte Teil (10) des landwirtschaftlichen Felds (4) bei einer optimalen Schnitthöhe geschnitten wird, die auf der Bildanalyse beruht, die von der Bildverarbeitungsvorrichtung (12) in Bezug auf diesen bestimmten Teil (10) des landwirtschaftlichen Felds (4) durchgeführt wird.

9. Landwirtschaftliche Mäheinrichtung (100) nach einem der Ansprüche 1-8, wobei die Bildaufnahmevorrichtung (6) zum wiederholten Aufnehmen von Bildern ausgebildet ist.

10. Landwirtschaftliche Mäheinrichtung (100) nach einem der Ansprüche 1-9, wobei die Steuereinheit (14) an Eingabemittel (30) gekoppelt ist, wie in der Form einer Tastatur, die einem Bediener erlaubt, die Steuereinheit (14) einzurichten und zu programmieren;
und/oder wobei die Steuereinheit an Anzeigemittel (32) gekoppelt ist, wie in der Form eines Monitors, um einen Bediener zu erlauben, das Einrichten und den Betrieb der landwirtschaftlichen Mäheinrichtung (100) zu überwachen.

11. Landwirtschaftliche Mäheinrichtung (100) nach einem der Ansprüche 1-10 wobei der Schneidemechanismus (2) einen Sensor (38) zum Erfassen der aktuellen Schnitthöhe des Schneidemechanismus (2) umfasst und wobei der Sensor an die Steuereinheit (14) gekoppelt ist, um Informationen an die Steuereinheit bereitzustellen, die sich auf eine aktuelle Schnitthöhe des Schneidemechanismus beziehen.

12. Landwirtschaftliche Mäheinrichtung (100) nach einem der Ansprüche 1-11, wobei die Bildverarbeitungsvorrichtung (12) ausgebildet ist, die folgenden Schritte durchzuführen:
i) Empfangen von Informationen, die ein Bild (8) darstellen, das von der Bildaufnahmevorrichtung (6) aufgenommen wurde;
ii) In Bezug auf die Darstellung des Bilds, Durchführen einer Bildanalyse, um Flächen dieses Bilds zu unterscheiden, die Gras (G) und/oder Klee (C) und/oder Unkraut (W) darstellen;
iii) Summieren aller Flächen, die in Schritt ii) bestimmt wurden, die Gras (G) darstellen und/oder Summieren aller Flächen, die in Schritt ii) bestimmt wurden, die Klee (C) darstellen, und/oder Summieren aller Flächen, die in Schritt ii) bestimmt wurden, die Unkraut (W) darstellen;
iv) auf der Basis der Summierung, die in Schritt iii) durchgeführt wurde, Bereitstellen, in Bezug auf das Bild, der Schätzinformationen (20), die an die Steuereinheit zu senden sind;
wobei Schritt ii) optional auf der Analyse von Bild-Patch-Merkmalen beruht, wie Farbunterscheidung, Randerfassung von verschiedenem Pflanzenmaterial und Morphologie von verschiedenem Pflanzenmaterial, Verwendung von Textureanalysefilter(n) oder Entropie von Bild-Patches, die ein solches Bild bilden;
und/oder wobei Schritt ii) optional durchgeführt wird, indem die Bildverarbeitungsvorrichtung (12) ausgebildet ist, eine Darstellung eines Satzes von Lernbildern (40) zu Rate zu ziehen, wobei jedes Bild (42) in dem Satz von Lernbildern (40) eine Darstellung eines realen Bilds oder eines künstlichen Bilds, wie eines computergenerierten Bilds, eines Teils (10) eines landwirtschaftlichen Felds (4) umfasst, das Gras und Klee und optional auch Unkraut umfasst, und wobei unterschiedlichen Elementen des Bilds Informationen zugeordnet sind, die sich darauf beziehen, welche Art von Pflanze (Gras (G), Klee (C) und optional Unkraut (W)) dieses Element darstellt;
und/oder wobei Schritt ii) optional durchgeführt wird, indem die Bildverarbeitungsvorrichtung (12) ausgebildet ist, eine Darstellung von Lernbilden in der Form eines Modells zu Rate zu ziehen, das imstande ist, einen Algorithmus durchzuführen, um Flächen dieses Bilds zu unterscheiden, die Gras (G) und/oder Klee (C) und/oder Unkraut (W) darstellen.

13. Landwirtschaftliche Mäheinrichtung (100) nach Anspruch 12, wobei die Bildverarbeitungsvorrichtung (12) zum Verwenden von tiefgehenden Lernalgorithmen und/oder künstlicher Intelligenz und/oder neuronalen Netzwerk(en) ausgebildet ist.

14. Verwendung einer landwirtschaftlichen Mäheinrichtung (100) nach einem der Ansprüche 1-13 zum Schneiden von Gras und Klee in einem landwirtschaftlichen Feld (4).

15. Verfahren zum Optimieren eines Ertrags von geernteter Biomasse aus einem landwirtschaftlichen Gras- und Kleefeld (4), wobei das Verfahren umfasst:
i) Schneiden des landwirtschaftlichen Felds (4), das Gras und Klee umfasst, unter Verwendung einer Mäheinrichtung;
ii) während Schneiden des landwirtschaftlichen Felds (4), Verwenden einer Bildverarbeitungsvorrichtung zum Bereitstellen von Schätzinformationen (20), die sich auf eine geschätzte Größe einer bestimmten Nutzpflanzenflächendeckung beziehen, die in dem Teil (10) des zu schneidenden landwirtschaftlichen Felds (4) vorhanden ist;
iii) auf der Basis der Schätzinformationen (20), die in Schritt ii) bereitgestellt werden, Einstellen der Schnitthöhe des Schneidemechanismus der Mäheinrichtung, um eine optimale Schnitthöhe des Teils des zu schneidenden Felds zu erhalten.

## Revendications

1. Appareil de fauchage agricole (100) comprenant :
- un mécanisme de coupe (2) pour couper l'herbe d'un champ agricole (4) ;
- un dispositif de capture d'image (6) configuré pour capturer des images (8) d'une partie (10) d'un champ agricole ;
- un dispositif de traitement d'image (12) pour analyser une image capturée par ledit dispositif de capture d'image (6) ;
- une unité de commande (14) ;
dans lequel ledit mécanisme de coupe (2) comprend un moyen de réglage de hauteur (16) pour régler la hauteur de coupe dudit mécanisme de coupe (2) en réponse à un signal de réglage de hauteur (18) étant fourni à celui-ci ; **caractérisé en ce que** :
- ledit dispositif de traitement d'image (12), par rapport à une image (8) capturée par ledit dispositif de capture d'image est configuré pour analyser ladite image de manière à fournir des informations d'estimation (20) relatives à une ampleur estimée d'une étendue de récolte spécifique étant présente dans ladite partie (10) du champ agricole (4) correspondant à ladite image (8) ;
- ladite unité de commande (14) étant configurée pour recevoir lesdites informations d'estimation (20) dudit dispositif de traitement d'image (12) ;
- ladite unité de commande (14) étant configurée pour fournir ledit signal de réglage de hauteur (18) audit moyen de réglage de hauteur (16) dudit mécanisme de coupe (2), en réponse auxdites informations d'estimation (20), attribuant ainsi un réglage de la hauteur de coupe dudit mécanisme de coupe (2) en réponse à un changement de ladite ampleur estimée de ladite étendue de culture spécifique de la partie (10) du champ agricole (4) devant être coupée par ledit mécanisme de coupe (2).

2. Appareil de fauchage agricole (100) selon la revendication 1, dans lequel lesdites informations d'estimation (20) relatives à une ampleur estimée d'une étendue de culture spécifique est choisie indépendamment parmi le groupe comprenant :
- une étendue d'herbe ; et/ou
- une étendue de trèfle ; et/ou
- une étendue de mauvaises herbes ; et/ou
- un rapport relatif à : étendue d'herbe / étendue de trèfle ; et/ou
- un rapport relatif à : étendue d'herbe / étendue de trèfle / étendue de mauvaises herbes.

3. Appareil de fauchage agricole (100) selon la revendication 1 ou 2, dans lequel ladite unité de commande (14) étant configurée pour fournir ledit signal de réglage de hauteur (18) audit moyen de réglage de hauteur (16) dudit mécanisme de coupe (2) de telle manière qu'une amplitude estimée relativement élevée d'étendue d'herbe et/ou une amplitude estimée relativement faible d'étendue de trèfle correspond à une hauteur de coupe relativement faible desdits mécanismes de coupe (2), tandis qu'une amplitude estimée relativement faible d'étendue d'herbe et/ou une amplitude estimée relativement élevée d'étendue de trèfle correspond à une hauteur de coupe relativement élevée dudit mécanisme de coupe (2) ;
et/ou dans lequel ladite unité de commande (14) est configurée pour fournir ledit signal de réglage de hauteur (18) audit moyen de réglage de hauteur (16) dudit mécanisme de coupe (2) selon un algorithme de réglage de hauteur de coupe prédéterminé; dans lequel ledit algorithme de réglage de hauteur de coupe prédéterminé est facultativement basé d'une part sur une corrélation entre lesdites informations d'estimation (20) et d'autre part sur une hauteur de coupe optimale.

4. Appareil de fauchage agricole (100) selon l'une quelconque des revendications 1-3, dans lequel ledit appareil comprend deux ou plusieurs dispositifs de capture d'image (6) qui sont configurés conjointement pour capturer des images (8) de deux ou plusieurs parties (10) dudit champ agricole (4) ;
dans lequel deux ou plusieurs parties (10) dudit champ agricole (4) sont agencées les unes par rapport aux autres selon un agencement mutuel en quinconce dans une direction perpendiculaire à la direction de déplacement dudit appareil de fauchage ;
dans lequel ledit dispositif de traitement d'image (12), par rapport à une image (8) capturée par chacun desdits dispositifs de capture d'image (6) est configuré pour analyser ladite image de manière à fournir une information d'estimation (20) relative à une amplitude estimée d'une étendue de culture spécifique étant présente dans la partie (10) du champ agricole (4) correspondant à chaque image (8) ;
dans lequel ladite unité de commande (14) étant configurée pour recevoir une information d'estimation (20) provenant dudit dispositif de traitement d'image (12) par rapport à chaque image (8) ;
dans lequel par rapport à chacune desdites images (8) étant capturée par lesdits deux ou plusieurs dispositifs de capture d'image (6) ladite unité de commande étant configurée pour fournir un signal de réglage de hauteur (18) à ce moyen de réglage de hauteur spécifique (16) dudit mécanisme de coupe (2) qui est chargé de couper la partie dudit champ agricole correspondant à cette image spécifique (8), en fonction desdites informations d'estimation spécifiques (20).

5. Appareil de fauchage agricole (100) selon l'une quelconque des revendications 1-4, dans lequel ladite unité de commande (14) est configurée pour recevoir un signal (22) d'un Système global de navigation par satellite (GNSS) (24), tel qu'un signal GPS ; dans lequel ladite unité de commande (14) est couplée facultativement à un système de stockage de données (26), dans lequel ladite unité de commande est configurée pour attribuer lesdites informations d'estimation (20) qui sont fournies par rapport auxdites images (8) capturées ; et dans lequel ladite unité de commande (14) est configurée pour attribuer des coordonnées relatives à une position géographique desdites images (8) capturées ; et dans lequel ladite unité de commande (14) est configurée pour stocker sur ledit système de stockage de données (26) d'une part une corrélation entre une amplitude estimée d'une étendue de culture spécifique et d'autre part des positions ; ladite corrélation représentant ainsi une carte d'étendue spécifique dudit champ agricole ou d'une partie de celui-ci.

6. Appareil de fauchage agricole (100) selon l'une quelconque des revendications 1-5, dans lequel le(s)dit(s) dispositif(s) de capture d'image (6) est(sont) agencé(s) devant le(s)dit(s) mécanisme(s) de coupe (2), par rapport à la direction de travail dudit appareil de fauchage agricole (100) ; et/ou dans lequel le(s)dit(s) dispositif(s) de capture d'image (6) est(sont) agencé(s) au niveau d'une position correspondant à une distance dudit(desdits) mécanisme(s) de coupe (2) dans une direction étant perpendiculaire à la direction de travail dudit appareil de fauchage agricole (100).

7. Appareil de fauchage agricole (100) selon l'une quelconque des revendications 1-6, dans lequel ladite unité de commande (14) est couplée à un capteur de vitesse (28) pour fournir des informations relatives à la vitesse de déplacement sur le sol dudit champ agricole (4) dudit appareil de fauchage agricole.

8. Appareil de fauchage agricole (100) selon l'une quelconque des revendications 1-7, dans lequel ladite unité de commande (14) est configurée pour fournir ledit signal de réglage de hauteur (18) audit moyen de réglage de hauteur (16) dudit mécanisme de coupe (2) à un délai (D) proportionnel à la vitesse de déplacement (V) sur le sol dudit appareil de fauche agricole ; tenant ainsi compte du laps de temps (T) à partir du moment dans le temps où une image (8) d'une partie spécifique (10) dudit champ agricole (4) est capturée par ledit dispositif de capture d'image (6) jusqu'au moment dans le temps auquel le mécanisme de coupe (2) arrive à cette partie spécifique (10) dudit champ agricole (4) ; de sorte que ladite partie spécifique (10) dudit champ agricole (4) est coupée à une hauteur de coupe qui est optimale, en fonction de ladite analyse d'image étant réalisée par ledit dispositif de traitement d'image (12) par rapport à cette partie spécifique (10) dudit champ agricole (4).

9. Appareil de fauchage agricole (100) selon l'une quelconque des revendications 1-8, dans lequel ledit dispositif de capture d'image (6) est configuré pour la capture répétée d'images.

10. Appareil de fauchage agricole (100) selon l'une quelconque des revendications 1-9, dans lequel ladite unité de commande (14) est couplée à un moyen de saisie (30), par exemple sous la forme d'un clavier permettant à un opérateur de configurer et de programmer ladite unité de commande (14) ;
et/ou dans lequel ladite unité de commande est couplée au moyen d'affichage (32), par exemple sous la forme d'un moniteur permettant à un opérateur de surveiller la configuration et le fonctionnement dudit appareil de fauchage agricole (100).

11. Appareil de fauchage agricole (100) selon l'une quelconque des revendications 1-10 dans lequel ledit mécanisme de coupe (2) comprend un capteur (38) pour détecter la hauteur de coupe actuelle du mécanisme de coupe (2) et dans lequel ledit capteur est couplé à ladite unité de commande (14) pour fournir des informations à ladite unité de commande relatives à une hauteur de coupe actuelle du mécanisme de coupe.

12. Appareil de fauchage agricole (100) selon l'une quelconque des revendications 1-11, dans lequel ledit dispositif de traitement d'image (12) est configuré pour réaliser les étapes suivantes :
i) la réception d'informations représentant une image (8) capturée par ledit dispositif de capture d'image (6) ;
ii) par rapport à ladite représentation de ladite image, la réalisation d'une analyse d'image afin de différencier les zones de cette image qui représentent de l'herbe (G) et/ou du trèfle (C) et/ou des mauvaises herbes (W) ;
iii) l'addition de toutes les zones déterminées à l'étape ii) qui représentent de l'herbe (G) et/ou l'addition de toutes les zones déterminées à l'étape ii) qui représentent du trèfle (C) et/ou l'addition de toutes les zones déterminées à l'étape ii) qui représentent des mauvaises herbes (W) ;
iv) en fonction de l'addition réalisée à l'étape iii), fournir par rapport à ladite image, lesdites informations d'estimation (20) à envoyer à ladite unité de commande ;
dans lequel l'étape ii) est basée facultativement sur l'analyse de caractéristiques de parcelles d'image, telles que la distinction des couleurs, la détection des contours de différents matières végétales et la morphologie de différentes matières végétales, l'utilisation d'un(des) filtre(s) d'analyse de texture ou l'entropie de parcelles d'images, constituant une telle image ;
et/ou dans lequel l'étape ii) est réalisée facultativement de manière à ce que ledit dispositif de traitement d'image (12) est configuré pour consulter une représentation d'un ensemble d'images d'apprentissage (40), dans lequel chaque image (42) de l'ensemble d'images d'apprentissage (40) comprend une représentation d'une image réelle ou d'une image artificielle, telle qu'une image générée par ordinateur, d'une partie (10) d'un champ agricole (4) comprenant de l'herbe et du trèfle et facultativement également des mauvaises herbes, et dans lequel des éléments distincts de ladite image ont été attribués avec des informations relatives au type de plante (herbe (G), trèfle (C) et facultativement des mauvaises herbes (W)) que représente cet élément ;
et/ou dans lequel l'étape ii) est réalisée facultativement de manière à ce que ledit dispositif de traitement d'image (12) est configuré pour consulter une représentation d'images d'apprentissage sous la forme d'un modèle capable d'exécuter un algorithme afin de différencier les zones de cette image qui représentent de l'herbe (G) et/ou du trèfle (C) et/ou des mauvaises herbes (W).

13. Appareil de fauchage agricole (100) selon la revendication 12, dans lequel ledit dispositif de traitement d'image (12) est configuré pour utiliser des algorithmes d'apprentissage profond et/ou l'intelligence artificielle et/ou les réseaux neuronaux.

14. Utilisation d'un appareil de fauchage agricole (100) selon l'une quelconque des revendications 1-13 pour couper de l'herbe et du trèfle dans un champ agricole (4).

15. Procédé d'optimisation du rendement de la biomasse récoltée à partir d'un champ agricole (4) d'herbe et de trèfle, dans lequel ledit procédé comprend :
i) la coupe dudit champ agricole (4) comprenant de l'herbe et du trèfle en utilisant l'appareil de fauchage ;
ii) lors de la coupe dudit champ agricole (4), l'utilisation d'un dispositif de traitement d'image pour fournir des informations d'estimation (20) relatives à une amplitude estimée d'une étendue de culture spécifique étant présente dans la partie (10) du champ agricole (4) à couper ;
iii) en fonction des informations d'estimation (20) telles que fournies à l'étape ii), le réglage de la hauteur de coupe du mécanisme de coupe dudit appareil de fauchage afin d'obtenir une hauteur de coupe optimale de ladite partie du champ à couper.
